# DEMANDE DE BREVET EUROPEEN

(11) **EP 4 563 408 A1**
(43) Date de publication de la demande: **04.06.2025**
(21) Numéro de dépôt: 24216271.7
(22) Date de dépôt: 28.11.2024
(51) Int. Cl.: B60N 2/34

(54) **SIÈGE POUR VÉHICULE ET VÉHICULE COMPRENANT UN TEL SIÈGE**

(30) Priorité: 29.11.2023 FR 2313256
(71) Demandeur: Rapido, 53101 Mayenne (FR)
(72) Inventeur: ROUSSEAU, Pierre, 53940 Saint-Berthevin (FR)
(74) Mandataire: Fidal Innovation

(57) **Abrégé**

Siège (1) pour véhicule, le siège (1) comprenant un bâti (2) destiné à être rigidement fixé à un châssis du véhicule, un premier panneau (7) dit d'assise et un deuxième panneau (8) dit de dossier, le panneau (7) d'assise et le panneau (8) de dossier étant articulés l'un par rapport à l'autre de sorte que le siège (1) peut prendre au moins les deux positions suivantes :
- Une position assise ;
- Une position allongée,
le siège (1) comprenant de plus au moins un troisième panneau (18) dit d'allongement, articulé d'une part par rapport au panneau (8) de dossier, de sorte que :
- dans la position assise, le panneau (18) d'allongement est sensiblement rabattu contre le panneau (8) de dossier ;
- dans la position allongée, le panneau (18) d'allongement et le panneau (8) de dossier sont sensiblement dans le prolongement l'un de l'autre suivant la direction longitudinale.

## Description

La présente demande se rapporte au domaine des véhicules de transport de passagers, et plus particulièrement des véhicules dits autocaravanes ou caravanes, c'est-à-dire comprenant un espace de vie.

Plus précisément, la présente demande se rapporte à un siège pour un tel véhicule, le siège se transformant pour offrir une surface de couchage, c'est-à-dire destinée à recevoir au moins un utilisateur en position allongée.

Dans le domaine des véhicules automobiles, il est connu d'avoir un ou plusieurs sièges comprenant une assise et un dossier, le dossier étant inclinable par rapport à l'assise pour permettre à un passager de prendre une position quasi-allongée, plus confortable qu'une position assise. De tels sièges se trouvent communément à l'avant des voitures particulières et des véhicules utilitaires. Toutefois, la position ne peut être que quasi-allongée, l'inclinaison du dossier étant limitée par les sièges arrière, et/ou afin de conserver un espace à l'arrière de la voiture qui soit suffisant pour un passager installé à l'arrière de la voiture.

Les véhicules autocaravanes ou caravanes sont des véhicules comprenant un espace de vie, c'est-à-dire un espace dans lequel on trouve des équipements relevant du logement, tel qu'une table, un coin cuisine, un coin couchette. Il s'agit notamment des camping-cars et des caravanes. L'espace de vie comprend en outre une banquette pour s'assoir, éventuellement associée à une table, et un coin de couchage. Afin d'optimiser l'espace de vie, il est connu d'avoir une banquette qui se transforme en couchette pour offrir une surface de couchage.

A cet effet, il est connu par exemple d'utiliser deux banquettes face à face de part et d'autre d'une table. La table est abaissée pour se mettre en position basse dans la continuité des assises des deux banquettes, de manière à obtenir une surface sensiblement plane horizontale destinée au couchage. Les coussins du dossier des banquettes peuvent être retirés pour être utilisés comme matelas pour le couchage.

Toutefois, les opérations à réaliser pour transformer la banquette en couchette sont fastidieuses. En outre, la banquette ne peut pas être utilisée comme siège pendant le roulage du véhicule.

Le document CN215621554 décrit un siège de véhicule se transformant en couchage en pivotant le dossier par rapport à l'assise en actionnant une poignée. Toutefois, une telle solution n'adresse pas le problème de l'encombrement éventuel situé derrière le dossier du siège. Or, il est commun dans un véhicule de loisirs de placer un siège dans l'espace de vie avec le dossier contre une paroi.

Le document US3282625 décrit un exemple de siège pour véhicule convertible en couchette, dans lequel le siège comprend une assise et un dossier chacun recouvert d'un coussin fixé à la structure métallique du siège. Dans une position assise, l'assise et le dossier du siège sont inclinés l'un par rapport à l'autre, tandis que dans une position allongée, l'assise et le dossier sont sensiblement dans un même plan horizontal. Lors du mouvement de la position assise à la position allongée, le dossier et le siège sont pivotés l'un par rapport à l'autre, et l'axe de rotation entre le dossier et le siège est également glissé longitudinalement afin d'écarter le dossier de l'éventuelle paroi contre laquelle il est appliqué en position assise. Pour éviter que le siège passe de la position assise à la position allongée pendant que le véhicule roule, par exemple sous l'effet d'un freinage soudain, le siège est bloqué en position assise par des moyens de verrouillage. Les moyens de verrouillage sont constitués d'une encoche sur la structure métallique qui supporte le siège. L'encoche vient en butée contre une barre fixée au châssis du véhicule. Pour déverrouiller le passage de la position assise à la position allongée, l'assise doit être soulevée pour désengager l'encoche de la barre et permettre le pivotement de l'assise par rapport au dossier.

Une telle solution n'apporte pas entière satisfaction.

Tout d'abord, le siège est dimensionné afin de trouver un compromis entre confort du passager assis sur le siège et l'encombrement, de sorte que la surface de l'assise et la surface du dossier sont limitées. Or, la surface de couchage, qui correspond à la somme de la surface de l'assise et de la surface du dossier, s'en trouve également limitée, et peut être insuffisante pour permettre à un utilisateur adulte de s'allonger confortablement.

En outre, le verrouillage dans la position assise n'est pas fiable, puisque des vibrations ou des soubresauts sur la route peuvent induire le soulèvement de l'assise pendant que le véhicule roule, et ainsi déverrouiller inopinément la position allongée.

Dans le document CN215621554 déjà présenté plus haut, l'assise et le dossier comprennent chacune une barre de support qui glisse transversalement de manière à former un support pour un coussin. Ainsi, la surface de couchage est augmentée transversalement. Toutefois, elle reste limitée longitudinalement. En outre, dans ce document, le dossier est pivoté par rapport à l'assise pour passer de la position assise à la position allongée, nécessitant qu'il y ait un espace suffisant pour positionner le dossier

L'invention vise ainsi à apporter une solution au moins aux inconvénients précités, et notamment à proposer un siège pouvant s'allonger tout en offrant une sécurité adéquate aux passagers pendant la phase de roulage du véhicule.

Un premier objet de l'invention est de proposer un siège pour véhicule transformable en couchette pouvant proposer une surface de couchage confortable.

Un deuxième objet de l'invention est de proposer un siège pour véhicule transformable en couchette adapté aux exigences en matière de sécurité routière.

Un troisième objet de l'invention est de proposer un siège pour véhicule transformable en couchette adapté à l'espace réduit d'un véhicule habitable.

Un quatrième objet de l'invention est de proposer un siège pour véhicule transformable en couchette qui soit facile à faire passer de la position siège à la position couchette, et inversement.

Un cinquième objet de l'invention est de proposer un siège pour véhicule transformable en couchette qui peut facilement être installé dans un véhicule.

Ainsi, selon un premier aspect, l'invention se rapporte à un siège pour véhicule, également appelé banquette. Le siège comprend un bâti destiné à être rigidement fixé un châssis du véhicule, conformément à la réglementation en vigueur, un premier panneau dit d'assise et un deuxième panneau dit de dossier. Le panneau d'assise et le panneau de dossier sont articulés l'un par rapport à l'autre autour d'au moins un premier axe de rotation solidaire d'au moins l'un du panneau d'assise et du panneau de dossier et qui s'étend suivant une direction transversale de sorte que le siège peut prendre au moins les deux positions suivantes :
- une position assise dans laquelle le panneau de dossier et le panneau d'assise sont inclinés l'un par rapport à l'autre sensiblement à angle droit ;
- une position allongée dans laquelle le panneau de dossier et le panneau d'assise sont sensiblement dans le prolongement l'un de l'autre suivant une direction longitudinale, de manière à former une surface de couchage.

Plus précisément, dans la position assise, l'inclinaison entre le panneau d'assise et le panneau de dossier n'est pas strictement égal à 90°, mais correspond à l'inclinaison requise par les réglementations et/ou recommandations en matière de siège automobile.

Le siège comprend en outre un système de glissement pour déplacer solidairement le panneau d'assise et le panneau de dossier par rapport au bâti du siège suivant une direction longitudinale, et un système de verrouillage pour verrouiller et déverrouiller le système de glissement au moins lorsque le siège est en position assise. De préférence, le système de verrouillage peut empêcher tout mouvement du panneau d'assise par rapport au bâti, lorsque le siège est en position assise.

Le siège comprend de plus au moins un troisième panneau dit d'allongement, articulé d'une part par rapport au panneau de dossier autour d'au moins un deuxième axe de rotation s'étendant suivant la direction transversale, distinct du premier axe transversal, et d'autre part par rapport au bâti autour d'au moins un troisième axe transversal distinct du premier axe transversal et du deuxième axe transversal, de sorte que :
- dans la position assise, le panneau d'allongement est sensiblement rabattu contre le panneau de dossier ;
- dans la position allongée, le panneau d'allongement et le panneau de dossier sont sensiblement dans le prolongement l'un de l'autre suivant la direction longitudinale.

Le siège en position allongée forme alors une couchette et permet d'obtenir une longueur de couchage supérieure à celle obtenue uniquement par le panneau d'assise et le panneau de dossier, de manière à proposer un confort amélioré à un utilisateur. L'encombrement du siège en position assise n'est toutefois pas augmenté, restant similaire à celui occasionné par les seuls panneaux d'assise et panneau de dossier. Le siège est ainsi particulièrement adapté à équiper un véhicule du type autocaravane ou caravane.

Le siège comprend en outre au moins une ceinture de sécurité à au moins deux points de fixation. La ceinture de sécurité comprend au moins une sangle comprenant une extrémité destinée à être fixée rigidement au châssis du véhicule, et au moins une accroche solidaire de la sangle. La ceinture de sécurité comprend en outre au moins un boîtier de réception de ladite accroche, le boîtier étant destiné à être rigidement fixé au bâti du siège, ou étant destiné à être fixé directement sur le châssis du véhicule.

Ainsi, grâce à la ceinture de sécurité dont les points de fixation sont, directement ou via le bâti du siège, sur le châssis du véhicule, le siège en position assise peut être utilisé pendant que le véhicule est en mouvement sur la route, en accord avec la réglementation en matière de sécurité automobile et routière.

Selon différents aspects, il est possible de prévoir l'une et/ou l'autre des caractéristiques ci-dessous prises seules ou en combinaison.

Selon un mode de réalisation, le panneau d'assise comprend une face supérieure destinée à être en contact avec un utilisateur et une face inférieure. Ainsi, au moins un boîtier peut prendre au moins deux positions :
- Une position dite escamotée, dans laquelle le boîtier se situe dans une région sous la face inférieure du panneau d'assise ;
- Une position dite d'accroche dans laquelle le boîtier se situe au moins en partie dans une région située au-dessus de la face inférieure du panneau d'assise.

En position escamotée, le boîtier peut être maintenu sous le siège, de sorte à ne pas gêner un passager allongé sur le siège en position allongée. C'est ainsi que selon un mode de réalisation, le boîtier est en position d'accroche au moins lorsque le siège est en position assise, et les boîtier est en position escamotée au moins lorsque le siège est en position allongée

Ainsi, en position d'accroche, le boîtier est accessible à un passage lorsque le siège est en position assise, tandis que dans la position de masquage, le boîtier peut demeurer hors de la zone dans laquelle se trouve le passage. Ainsi, la position de masquage des boîtiers est avantageusement mise en oeuvre lorsque le siège est en position allongée, évitant toute gêne pour le passager qui souhaite s'allonger.

Selon un mode de réalisation, la ceinture de sécurité peut être une ceinture à trois points de fixation. Le siège peut alors comprendre de plus un mât vertical, et qui destiné à être fixé rigidement au châssis du véhicule. Les trois points de fixation de la ceinture sont alors formés sur le mât. La sangle est guidée au moins en partie le long du mât. Une telle conception permet de faciliter l'installation du siège muni de la ceinture de sécurité en fixant le mât au châssis du véhicule. La sécurité des passagers est ainsi assurée pendant la phase de roulage du véhicule.

Le mât peut s'étendre de préférence sensiblement au-dessus du panneau de dossier lorsque le siège est en position assise, de manière à amener la sangle dans une zone facilement accessible par un passager sur le siège en position assise.

Selon un mode de réalisation, le système de verrouillage comprend au moins une gâche fixée rigidement sur au moins l'un du panneau d'assise ou du panneau de dossier, et qui comprend au moins une serrure fixée rigidement au bâti, le système de verrouillage pouvant prendre deux positions :
- Une position verrouillée, dans laquelle la gâche est bloquée dans la serrure, le siège étant en position assise ;
- Une position déverrouillée, dans laquelle la gâche est écartée de la serrure.

Le système de verrouillage passe de la position verrouillée à la position déverrouillée par actionnement d'un doigt de blocage. Le système de verrouillage permet ainsi d'offrir un verrouillage de la position assise du siège, pour éviter tout mouvement des panneaux pendant le roulage du véhicule. Notamment, le système gâche/ serrure est robuste et fiable, et bloque totalement tout déplacement en glissement et/ou en rotation des panneaux du siège. Le siège répond ainsi aux exigences en matière de sécurité.

Selon un mode de réalisation, le système de glissement est de type coulisse, et comprend au moins un rail longitudinal sur le bâti et au moins une glissière sur le panneau d'assise coopérant avec ledit rail. Le système de glissement permet d'obtenir le déplacement longitudinal des panneaux de manière efficace.

Selon un mode de réalisation, la glissière peut comprendre au moins une barre de glissière longitudinale montée glissante sur le rail, la glissière pouvant prendre au moins deux positions :
- Une position rétractée, dans laquelle la longueur de la barre de glissière hors rail suivant la direction longitudinale est minimale, le siège étant en position assise ;
- Une position déployée, dans laquelle la longueur de la barre de glissière hors rail suivant la direction longitudinale est maximale, le siège étant en position allongée.

La barre de glissière permet d'y fixer le panneau d'assise pour provoquer le mouvement entre les deux positions du siège. La barre peut être télescopique, par exemple en au moins deux tronçons, de manière à augmenter la course maximale pour permettre le passage du siège en position allongée en déplaçant les au moins trois panneaux.

Selon un mode de réalisation, le panneau d'assise peut comprendre une plaque munie de crochets pour former un système de sécurité, par exemple de type Isofix et/ou I-size, destiné à la fixation d'un siège enfant. Le système de sécurité se déplace avec le panneau d'assise, de sorte qu'il n'interfère pas avec les autres panneaux lors du passage du siège entre ses deux positions. Le système de sécurité permet d'utiliser le siège de manière identique à un siège pour véhicule, et répondant aux exigences en matière de sécurité.

Selon un mode de réalisation, le siège peut comprendre un système d'extension latérale, qui comprend au moins un support destiné à supporter un coussin. Ledit support est monté glissant sur au moins un desdits panneaux suivant une direction transversale. Le système d'extension latérale peut alors prendre au moins deux positions :
- Une position rétractée dans laquelle le support est intégré dans le panneau sur lequel le support est monté ;
- Une position déployée dans laquelle le support est sorti au moins en partie hors du panneau sur lequel il est monté.

Le système d'extension permet ainsi d'augmenter latéralement la surface d'au moins un panneau lorsque le siège est en position allongée. En pratique, chaque panneau est muni d'un système d'extension latérale, permettant d'augmenter latéralement la totalité de la surface de couchage.

Selon un mode de réalisation, ledit support peut être muni d'un pied pivotant destiné à venir en contact avec un plancher du véhicule lorsque le support est en position déployée. La robustesse et l'équilibre du siège en position allongée sont améliorés

Selon un mode de réalisation, au moins l'un du panneau d'assise, du panneau de dossier et du panneau d'allongement sur lequel le support est monté comprend un coussin. Le support en position rétractée peut alors être intégré dans le coussin du panneau sur lequel le support est monté. Le support en position rétractée est ainsi invisible, et peut être aisément dévoilé pour passer en position déployée. L'esthétisme est augmenté, et la manipulation est facilitée. Il est de préférence de la face inférieure des coussins des panneaux, de sorte qu'un utilisateur assis sur le siège en position assise ou un utilisateur allongé sur le siège en position allongée ne les sent pas.

Selon un mode de réalisation, le système d'extension latérale peut comprendre au moins trois supports, chaque support étant monté sur l'un du panneau d'assise, du panneau de dossier et du panneau d'allongement.

Selon un mode de réalisation, le panneau de dossier peut comprendre au moins un repose-tête. Le panneau d'allongement peut alors comprendre un logement de forme négative au repose-tête, de sorte qu'en position allongée le repose-tête du panneau de dossier est inséré dans le logement du panneau d'allongement. Le confort aussi bien en position assise qu'en position allongée du siège est augmenté.

Selon un mode de réalisation, le siège peut comprendre un actionneur pour passer le siège de la position assise à la position allongée et inversement, l'actionneur comprenant au moins un vérin commandé électriquement. Le vérin peut prendre appui d'une part sur le bâti et d'autre part sur le panneau d'allongement. Le passage d'une position à l'autre se fait sans effort pour l'utilisateur. Eventuellement, le vérin peut être débrayable manuellement, de manière à pouvoir faire passer le siège d'une position à l'autre même en cas de défaillance du vérin.

Selon un mode de réalisation, le siège peut comprendre au moins une ceinture de sécurité à au moins deux points, et de préférence au moins trois points pour pouvoir utiliser le siège pendant le roulage du véhicule, et dépendamment des exigences en matière de sécurité selon les pays.

Selon un deuxième aspect, l'invention concerne un véhicule, par exemple de type autocaravane ou caravane, comprenant au moins un siège tel que présenté ci-dessus. Le véhicule offre ainsi, dans un espace réduit, la possibilité d'obtenir rapidement et aisément une couchette qui est particulièrement confortable.

Des modes de réalisation de l'invention seront décrits ci-dessous par référence aux dessins, décrits brièvement ci-dessous :
[Fig. 1] représente une vue tridimensionnelle surélevée d'un siège transformable en couchage pour véhicule, selon un mode de réalisation, dans une position assise.
[Fig. 2] représente une vue de côté du siège de la figure 1.
[Fig. 3] représente une vue de dessus du siège de la figure 1, sur lequel des panneaux ont été retirés.
[Fig. 4] représente une vue tridimensionnelle de dessous du siège débarrassé des panneaux de la figure 3.
[Fig.5] représente une vue de détail d'un système de verrouillage du siège des figures 1 à 4 et 6 à 12.
[Fig.6] représente une vue similaire à celle de la figure 1, le siège étant dans une position intermédiaire entre la position assise de la figure 1, et une position allongée.
[Fig.7] représente une vue de côté du siège de la figure 6.
[Fig.8] représente une vue de dessus du siège de la figure 6, sur lequel des panneaux ont été retirés.
[Fig.9] représente une vue tridimensionnelle de dessous du siège débarrassé des panneaux de la figure 7.
[Fig. 10] représente une vue similaire à celle de la figure 1 et de la figure 6, le siège étant dans une position allongée.
[Fig. 11] représente une vue de côté du siège de la figure 10, un système d'extension latérale étant en position déployée.
[Fig. 12] représente une vue de dessus de trois-quarts du siège de la figure 11.
[Fig. 13] représente une vue de détail d'un boîtier d'une ceinture de sécurité lorsque le siège est en position allongée.
Fig.14] représente une vue de détail du boîtier d'une ceinture de sécurité lorsque le siège est en position assise.

Sur les dessins, des références identiques désignent des objets identiques ou similaires.

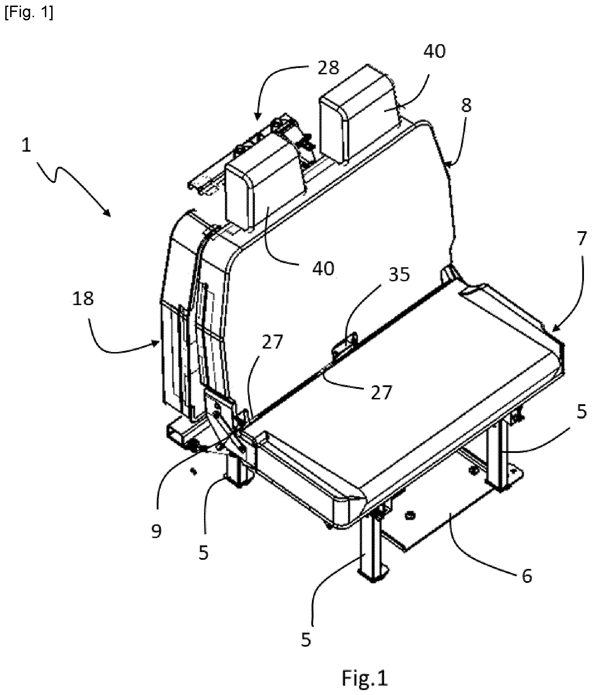

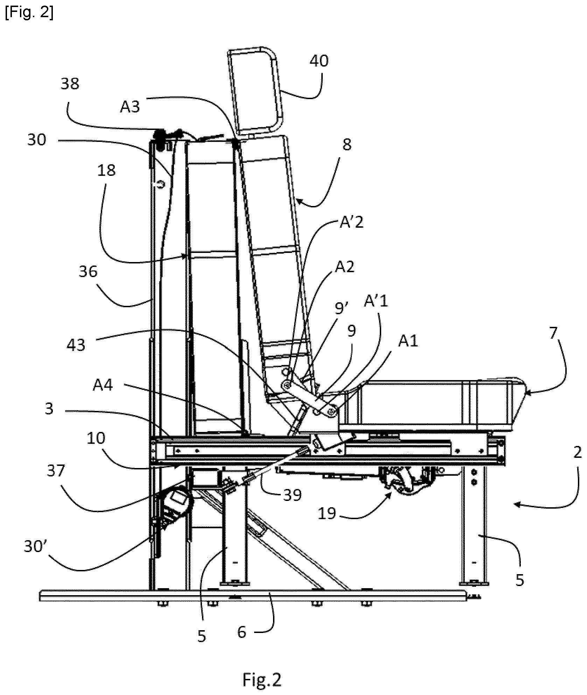

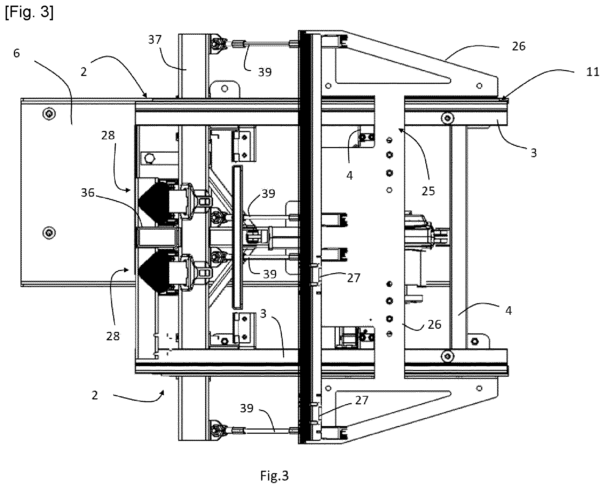

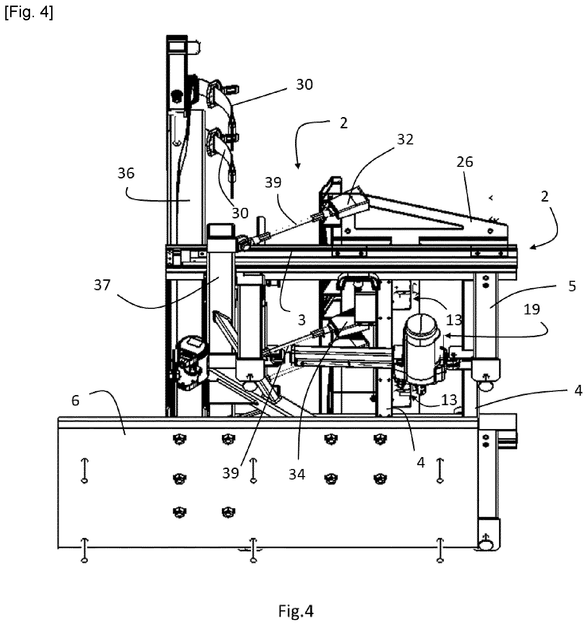

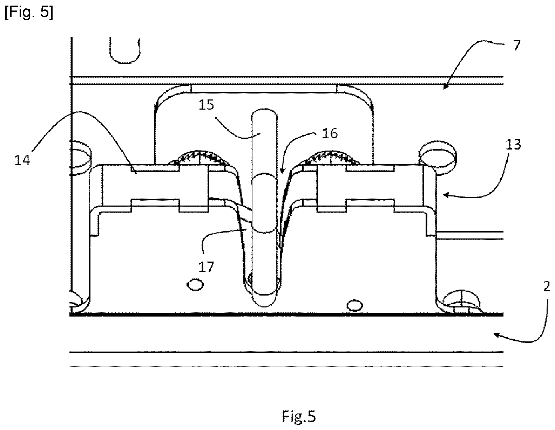

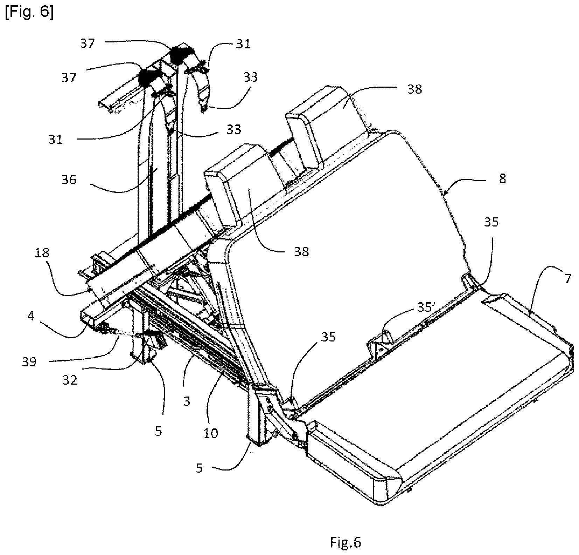

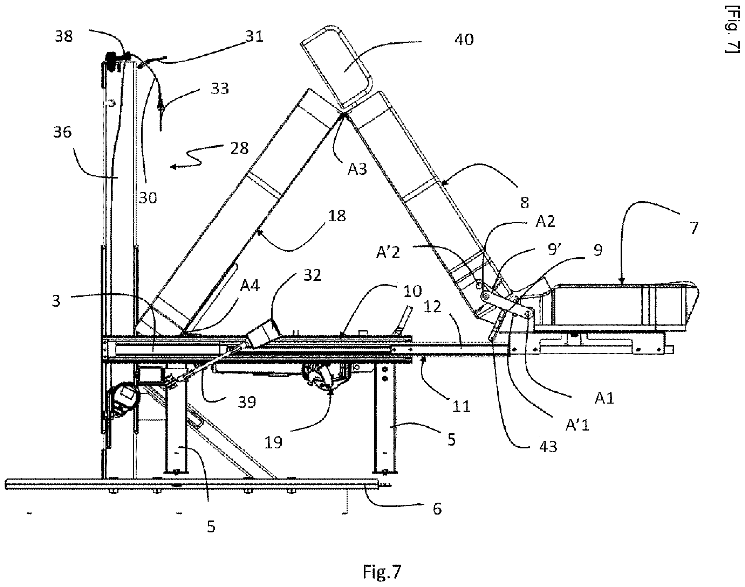

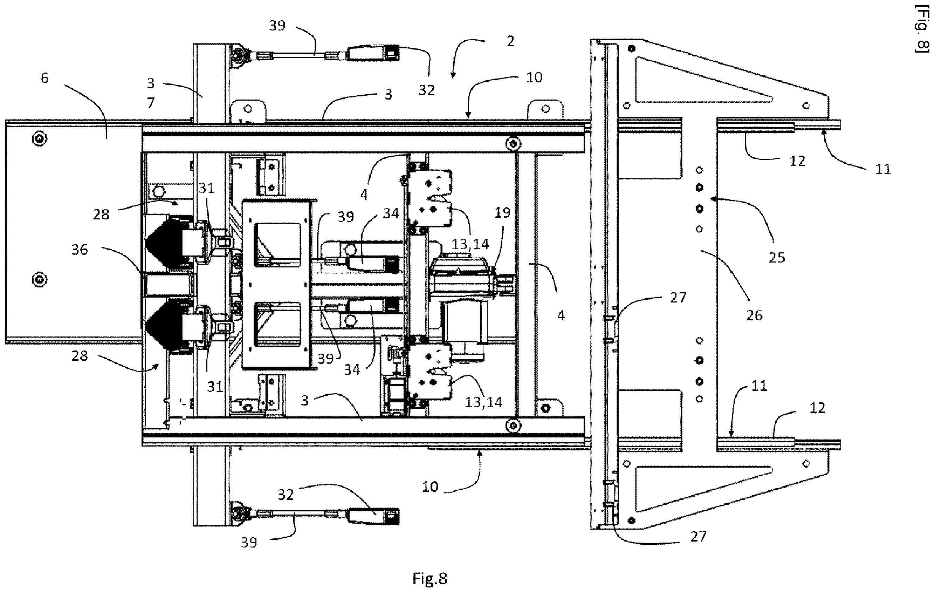

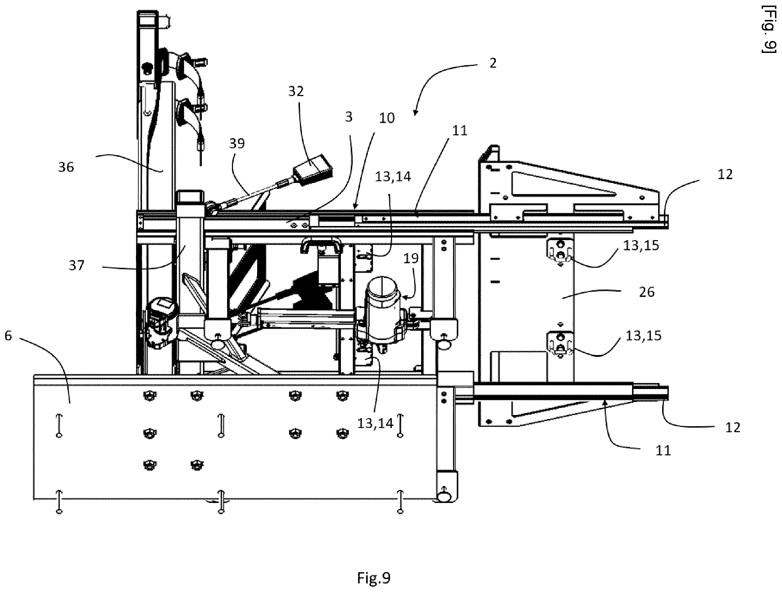

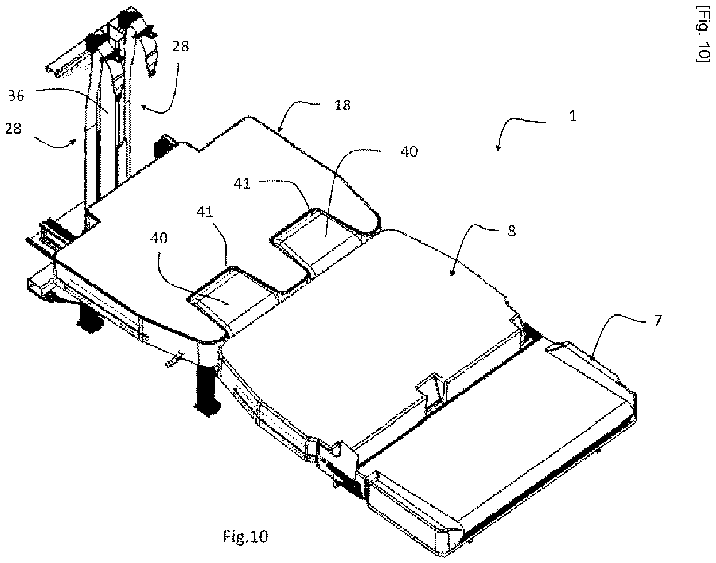

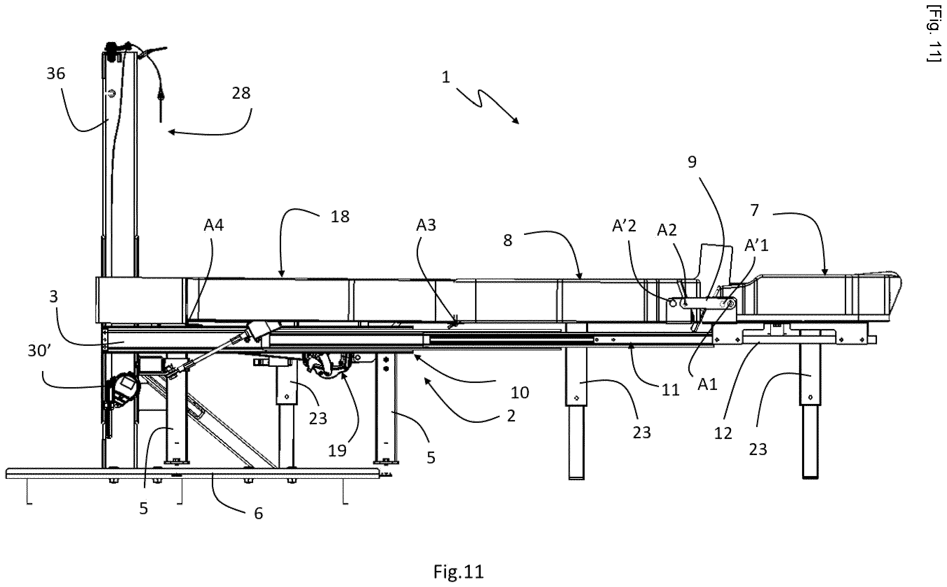

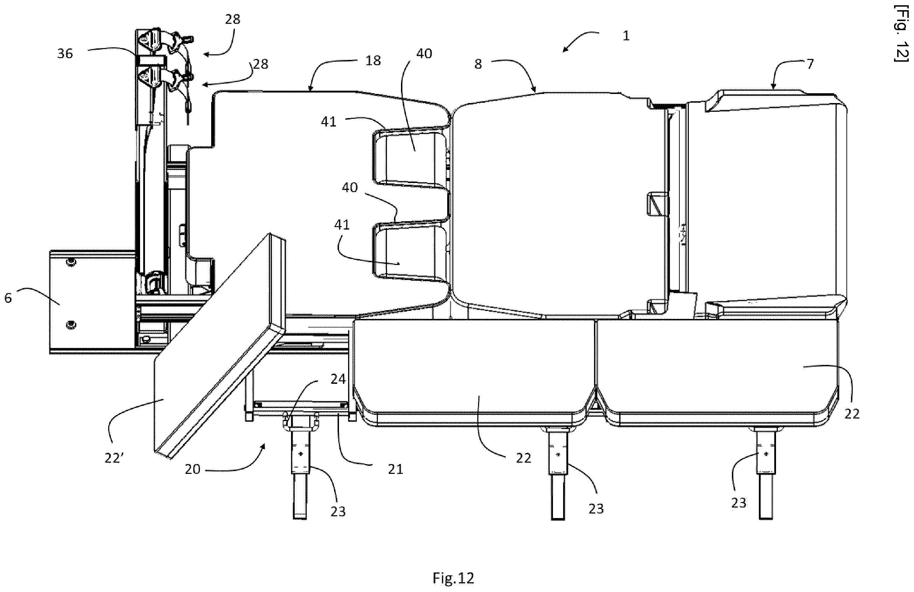

Sur les figures 1 à 14, on a représenté un siège 1 transformable en couchage. Le siège 1 est particulièrement destiné à être embarqué et installé dans un véhicule comprenant un volume de vie, notamment un véhicule dit habitable ou de loisir. Un tel véhicule est par exemple automobile, comme un camping-car ou une fourgonnette, mais pas nécessairement, par exemple une caravane ou un mobil-home. Le siège 1 est destiné à au moins un passager assis dessus. Selon l'exemple présenté ci-dessous, le siège est destiné à au moins deux passagers assis dessus.

Le siège 1 comprend notamment un bâti 2 destiné à être rigidement fixé à un châssis du véhicule. Le bâti 2 est par exemple formé d'une ossature métallique, comprenant typiquement au moins un, et en pratique au moins deux barres 3 longitudinales, reliées par au moins une, et en pratique au moins deux barres 4 transversales, et comprenant des pieds 5 verticaux, par exemple quatre pieds verticaux, destinés à être fixés rigidement directement ou non au châssis du véhicule, par exemple à un plancher du châssis. Le bâti 2 du siège 1 peut en outre comprendre une semelle 6, destinée à être fixée rigidement directement ou non au plancher du châssis du véhicule. La conception du bâti 2 et sa fixation au châssis du véhicule répondent aux exigences définies par les réglementation en matière de sécurité dans le domaine automobile. Notamment, le bâti 2 du siège 1 reste fixe par rapport au châssis du véhicule dans les conditions définies par les réglementations.

Dans ce qui suit, on définit une direction longitudinale sensiblement parallèle aux barres longitudinales du bâti 2, une direction transversale sensiblement perpendiculaire à la direction longitudinale, la direction longitudinale et la direction transversale définissant un plan horizontal. On définit par ailleurs une direction verticale comme perpendiculaire au plan horizontal, et qui est la direction d'extension des pieds 5.

On utilisera également dans ce qui suit les termes au-dessus, en-dessous, sur, sous et leurs variantes en référence à l'orientation naturelle du siège 1, qui est celle des figures, dans laquelle le siège est destiné à être fixé à un plancher d'un véhicule, ledit plancher étant en général, dans des conditions normales d'utilisation, sensiblement parallèle au sol.

Par ailleurs, à des fins de clarté, on définit dans la suite, suivant la direction longitudinale, un sens avant et un sens arrière.

Le siège 1 comprend par ailleurs au moins un premier panneau dit panneau 7 d'assise et un deuxième panneau dit panneau 8 de dossier.

Selon un mode de réalisation, chaque panneau 7, 8 comprend un cadre rigide, par exemple métallique ou en bois, et un coussin fixé sur le cadre rigide. Par coussin, on désigne ici de manière générale un élément moelleux, confortable pour un passager, de préférence élastique et/ou souple. Il s'agit par exemple d'une mousse, ou toute autre garniture pouvant apporter le moelleux, enveloppée dans une housse souple, par exemple en tissu, en plastique ou en cuir. De préférence, la housse peut être amovible. La housse peut envelopper le cadre rigide tout ou en partie afin de le masquer.

Le panneau 7 d'assise et le panneau 8 de dossier sont articulés l'un par rapport à l'autre autour d'au moins un premier axe A1 de rotation sensiblement transversal, de sorte que le siège 1 peut prendre au moins les deux positions suivantes :
- Une position assise dans laquelle le panneau 7 d'assise et le panneau 8 de dossier sont inclinés l'un par rapport à l'autre sensiblement à angle droit ;
- Une position allongée dans laquelle le panneau 7 d'assise et le panneau 8 de dossier sont sensiblement dans le prolongement l'un de l'autre suivant une direction longitudinale, de manière à former une surface de couchage.

Plus précisément, dans la position assise, l'inclinaison entre le panneau 7 d'assise et le panneau 8 de dossier n'est pas strictement égal à 90°, mais correspond à l'inclinaison requise par les réglementations et/ou les recommandations en matière de siège automobile.

De préférence, le panneau 7 d'assise conserve, que ce soit dans la position allongée ou dans la position assise, une configuration dans laquelle il est sensiblement horizontal. Ainsi, lorsque le siège 1 est en position assise, le panneau 7 d'assise offre une surface d'assise pour qu'un passager puisse s'assoir. En position assise, le panneau 8 de dossier est alors sensiblement vertical, de sorte que le passager assis sur le panneau 7 d'assise puisse poser son dos sur le dossier. L'inclinaison du panneau 8 de dossier par rapport au panneau 7 d'assise peut être réglable par tout moyen connu lorsque le siège est en position assise, afin que le passager puisse adapter l'inclinaison à son confort. Dès lors, en position allongée, le panneau 8 de dossier devient sensiblement horizontal, de manière à offrir une surface dans la continuité de la surface d'assise du panneau 7 d'assise, c'est-à-dire de manière à offrir une surface de couchage sur laquelle le passager peut s'allonger.

Dans ce qui suit, on désignera la face supérieure d'un panneau comme étant la face destinée à être en contact avec un utilisateur, et par opposition la face inférieure comme étant la face opposée à la face supérieure.

De manière immédiate, le siège 1 peut prendre toute position intermédiaire entre la position assise et la position allongée.

Le premier axe A1 de rotation peut être solidaire du panneau 7 d'assise ou du panneau 8 de dossier ou être commun à la fois au panneau 7 d'assise et au panneau 8 de dossier, de sorte que le premier axe A1 se déplace par rapport au bâti 2 avec le panneau 7 d'assise et le panneau 8 de dossier lors du passage du siège 1 d'une position à l'autre.

Selon un mode de réalisation, l'articulation entre le panneau 7 d'assise et le panneau 8 de dossier est réalisée par une articulation de type pantographe autour de quatre premiers axes A1, A'1 et A2, A'2 transversaux distincts les uns des autres, à savoir un premier axe A1 solidaire du panneau 7 d'assise et un premier axe A2 solidaire du panneau 8 de dossier, reliés par au moins une première biellette 9, et un premier axe A'1 solidaire du panneau 7 d'assise et un premier axe A'2 solidaire du panneau 8 de dossier, reliés par au moins une deuxième biellette 9', qui croise la première biellette 9 lorsque le siège 1 est en position assise. De préférence, les premiers axes A1 et A2 solidaires respectivement du panneau 7 d'assise et du panneau 8 de dossier sont reliés par deux premières biellettes 9 disposées, suivant la direction transversale, de part et d'autre des panneaux 7 d'assise et 8 de dossier. De même, de préférence, les deuxièmes axes A'1 et A'2 solidaires respectivement du panneau 7 d'assise et du panneau 8 de dossier sont reliés par deux deuxièmes biellettes 9' disposées, suivant la direction transversale, de part et d'autre des panneaux 7 d'assise et 8 de dossier. L'articulation de type pantographe permet d'aménager un espace entre le panneau 7 d'assise et le panneau 8 de dossier lorsque le siège 1 est en position assise, cet espace permettant l'accès à des systèmes de sécurité notamment, comme cela sera vu plus loin.

Le siège 1 comprend par ailleurs un système 10 de glissement pour déplacer le panneau 7 d'assise et le panneau 8 de dossier par rapport au bâti 2 suivant la direction longitudinale. Plus précisément, le système 10 de glissement permet de déplacer solidairement le panneau 7 d'assise et le panneau 8 de dossier, ainsi que le au moins un premier axe A1 de rotation, par rapport au bâti 2, et donc par rapport au châssis du véhicule.

Selon un mode de réalisation, le panneau 7 d'assise comprend un unique degré de liberté par rapport au bâti 2, à savoir un degré de liberté en glissement suivant la direction longitudinale. Ainsi, le panneau 7 d'assise comprend un plan d'assise qui demeure sensiblement parallèle au plan de glissement lorsque le système 10 de glissement est actionné pour faire passer le siège de l'une à l'autre de ses positions. En d'autres termes encore, le panneau 7 d'assise ne pivote pas par rapport au bâti 2.

Selon un mode de réalisation, le système 10 de glissement est de type coulisse. Plus précisément, le système 10 de glissement peut comprendre une coulisse ou rail fixé rigidement au bâti 2. Par exemple, chaque barre 3 longitudinale du bâti 2 est conformée en rail en C, de manière à recevoir une glissière 11 du système 10 de glissement, ladite glissière 11 étant fixée rigidement sur une face inférieure du panneau 7 d'assise. La glissière 11 comprend par exemple au moins une barre 12 de glissière, qui s'insère dans un rail formé sur une barre 3 longitudinale du bâti 2. En pratique, la glissière 11 comprend deux barres 12 de glissière, chaque barre 12 de glissière s'insérant dans un rail formé sur une barre 3 longitudinale du bâti 2. Ainsi, chaque barre 12 de glissière peut prendre au moins deux positions :
- Une position rétractée, dans laquelle la longueur de la barre 12 de glissière hors rail suivant la direction longitudinale est minimale, le siège 1 étant en position assise.
- Une position déployée, dans laquelle la longueur de la barre 12 de glissière hors rail suivant la direction longitudinale est maximale, le siège 1 étant en position allongée.

Par longueur hors rail, on désigne ici la dimension longitudinale de la portion de la barre 12 de glissière qui est sortie d'un rail formé sur une barre 3 longitudinale du bâti 2. En d'autres termes encore, il s'agit de la dimension longitudinale de la portion de la barre 12 de glissière qui est en porte-à-faux sur une barre 3 longitudinale du bâti 2. Le porte-à-faux peut être réduit ou supprimé, par exemple en faisant reposer l'extrémité de la barre 12 de glissière sur un élément du véhicule, comme sur un podium d'un autre siège situé en face du siège 1.

Ainsi, en actionnant le déplacement longitudinal du panneau 7 d'assise par rapport au bâti 2 par la mise en oeuvre du système 10 de glissement, le siège 1 peut passer de la position assise à la position allongée, et inversement. Par convention, on choisit une direction longitudinale avant correspondant à la direction dans laquelle le glissement est réalisé pour passer de la position assise à la position allongée ; la direction arrière est la direction dans laquelle le glissement est réalisé pour passer de la position allongée à la position assise.

Comme cela explicité plus loin, chaque barre 12 de glissière peut être télescopique afin d'obtenir une longueur maximale hors rail de la barre 12 de glissière, c'est-à-dire dans la position déployée, qui est la plus importante possible. A cet effet, chaque barre 12 de glissière peut comprendre deux, trois ou plus tronçons glissant l'un par rapport, le panneau 7 d'assise étant fixé au tronçon qui a la course la plus grande lors du déplacement longitudinal par rapport au bâti 2.

Selon un mode de réalisation, afin de faciliter la cinématique de déplacement entre la position assise et la position allongée, l'au moins un premier axe de rotation est monté glissant suivant la direction longitudinale par rapport au bâti 2. Plus précisément, selon l'exemple des figure, l'axe A1 formé sur le panneau 7 d'assise est monté glissant suivant la direction longitudinale par rapport au bâti, à l'exclusion d'autre degré de liberté par rapport au bâti 2, de sorte que le panneau 7 d'assise conserve pendant le déplacement de la glissière 11 entre les différentes positions du siège 1 une position sensiblement horizontale.

Le siège 1 comprend de plus un système **13** de verrouillage, afin de verrouiller et de déverrouiller le système 10 de glissement, au moins lorsque le siège 1 est dans la position assise. En effet, lorsque le siège 1 est dans la position assise, il est utile de pouvoir l'utiliser pendant le déplacement du véhicule comme un siège classique pour un passager, c'est-à-dire notamment pendant que le véhicule roule sur une route. Les mouvements du véhicule sur la route, ainsi que les accélérations et les décélérations, peuvent occasionner le glissement de la glissière 11 le long des rails du bâti 2, et faire passer accidentellement le siège 1 en position allongée. Les risques de blessures d'un passager alors assis sur le siège 1 sont élevées. Même en l'absence de passager, le passage inopiné en position allongée du siège 1 peut occasionner des dégâts à l'intérieur du véhicule. Ainsi, le système 13 de verrouillage empêche le passage de la position assise à la position allongée en l'absence d'une action volontaire de la part d'un utilisateur.

Selon un mode de réalisation, le système 13 de verrouillage comprend un élément de type serrure **14** fixée rigidement sur le bâti 2 et un élément de type gâche **15** fixée rigidement sur l'un du panneau 7 d'assise ou du panneau 8 de dossier, sous la face inférieure. Selon l'exemple des figures, la gâche est fixée sur la face inférieure du panneau 7 d'assise. Plus précisément, selon un mode de réalisation, la serrure 14 comprend une ouverture **16** dans laquelle la gâche 15 peut s'insérer par glissement longitudinale. La serrure 14 comprend de plus un doigt 17 actionnable de manière à bloquer l'ouverture 16 ou à laisser l'ouverture 16 dégagée. Le doigt 17 est contraint élastiquement dans la position dans laquelle il bloque l'ouverture 14. Le système 13 de verrouillage peut prendre deux positions :
- Une position verrouillée, dans laquelle la gâche 15 est bloquée dans la serrure 14, en l'occurrence dans l'ouverture 16 de la serrure 14, le siège 1 étant en position assise ;
- Une position déverrouillée, dans laquelle la gâche 15 est sortie de la serrure 14, en l'occurrence est sortie de l'ouverture 16 de la serrure 14.

Le système 13 de verrouillage passe de la position verrouillée à la position déverrouillée par actionnement du doigt 17 de blocage de manière à dégager l'ouverture 16 et permettre la sortie de la gâche 15.

Ainsi, en position assise du siège 1, la gâche 15 est dans l'ouverture 16 de la serrure 14, et elle est bloquée par le doigt 17. Pour passer en position allongée du siège 1, un actionneur est par exemple enclenché par un utilisateur afin de déverrouiller le système 13 de verrouillage. Le panneau 7 d'assise et le panneau 8 de dossier sont alors libres de se déplacer longitudinalement vers l'avant par la mise en oeuvre du système 10 de glissement. Une fois l'actionneur relâché, le doigt 17 est de nouveau dans la position dans laquelle il bloque l'entrée 16 de la serrure. Pour remettre le siège 1 en position assise, le panneau 7 d'assise et le panneau 8 de dossier sont déplacés vers l'arrière grâce au système 10 de glissement, jusqu'à ce que la gâche 15 vienne en butée contre le doigt 17. Le doigt 17 se déplace alors, soit par la mise en oeuvre de l'actionneur, soit en appuyant sur le doigt 17 avec la gâche 15, la forme du doigt 17 étant adaptée pour occasionner le déplacement du doigt 17 contre la contrainte élastique, pour dégager l'ouverture 16 de la serrure 14. Le doigt 17 reprend sa position de blocage de l'ouverture 16 dès que la gâche 15 a dépassé le doigt 17 lors du mouvement vers l'arrière.

Le siège 1 comprend enfin au moins un troisième panneau **18,** appelé panneau 18 d'allongement, permettant d'allonger la surface de couchage. Plus précisément, le panneau 18 d'allongement est articulé d'une part par rapport au panneau 8 de dossier autour d'un moins un deuxième axe **A3** de rotation transversal, distinct du ou des premiers axes A1, A2, A'1, A'2 transversal s'étendant suivant la direction transversale, et d'autre part par rapport au bâti 2 un troisième axe **A4** de rotation s'étendant suivant la direction transversale distinct du premier axe A1 de rotation et du deuxième axe A3 de rotation, de sorte que :
- dans la position assise, le panneau 18 d'allongement est sensiblement rabattu contre le panneau 8 de dossier ;
- dans la position allongée, le panneau 18 d'allongement et le panneau 8 de dossier sont sensiblement dans le prolongement l'un de l'autre suivant la direction longitudinale.

En d'autres termes, l'angle entre le panneau 8 de dossier et le panneau 18 d'allongement peut être de sensiblement 0° dans la position assise et sensiblement de 180° dans la position allongée.

Ainsi, dans la position allongée, la longueur totale correspondant à la longueur de couchage est formée par les trois panneaux 7, 8 et 18. Cette longueur augmentée permet d'améliorer le confort d'un utilisateur pour s'allonger sur le siège 1 en position allongée. Plus précisément, lorsque le panneau 7 d'assise est déplacé grâce au système 10 de glissement, l'angle entre le panneau 18 d'allongement et le panneau 8 de dossier varie, en portefeuille. Ainsi, la position du panneau 18 d'allongement est guidé par le glissement du panneau 7 d'assise.

De manière similaire au premier axe A1 de rotation, le deuxième axe A3 de rotation peut être solidaire du panneau 8 de dossier ou du panneau 18 d'allongement ou être commun à la fois au panneau 7 d'assise et au panneau 8 de dossier, de sorte que le deuxième axe A3 se déplace par rapport au bâti 2 avec le panneau 8 de dossier et le panneau 18 d'allongement lors du passage du siège (1) d'une position à l'autre. L'articulation entre le panneau 8 de dossier et le panneau 18 d'allongement peut également être réalisée par une articulation de type pantographe, c'est-à-dire en mettant en oeuvre plusieurs deuxièmes axes.

Selon un mode de réalisation, le troisième axe A4 est commun et est fixé rigidement au bâti 2 du siège 1 et au panneau 18 d'allongement, de sorte que le troisième axe A4 ne se déplace pas lorsque le siège 1 passe d'une position à l'autre. En d'autres termes les panneaux 7, 8 et 18 du siège 1 ne sont pas libres de se déplacer longitudinalement par rapport au bâti 2 : la course maximale de déploiement des panneaux 7, 8 et 18 est limitée par la fixation rigide entre le panneau 18 d'allongement et le bâti 2 réalisée par le troisième axe A4. Une telle fixation rigide entre les panneaux 7, 8 et 18 et le bâti 2 permet en particulier de limiter des mouvements dangereux entre les panneaux 7, 8 et 18 du siège 1 et le châssis du véhicule, pour la sécurité et le confort des passagers.

De manière similaire au panneau 7 d'assise et au panneau 8 de dossier, le panneau 18 d'allongement peut comprendre un cadre rigide, notamment métallique, sur lequel un coussin est fixé.

Selon un mode de réalisation, le deuxième axe A3 de rotation est formé par un élément de type charnière, fixé rigidement d'un part sur le cadre rigide du panneau 8 de dossier et d'autre part sur le cadre rigide du panneau 18 d'allongement. La fixation de la charnière est réalisée de préférence sous la face inférieure de chaque panneau 8, 18.

Selon un mode de réalisation, le siège 1 comprend un actionneur dit de position, par exemple électrique, pour passer le siège 1 de la position assise à la position allongée et inversement en mettant en oeuvre le système 10 de glissement. Selon l'exemple présenté, l'actionneur de position comprend au moins un vérin 19 commandé électriquement, le vérin 19 prenant appui d'une part sur le bâti 2 et d'autre part sur le panneau 18 d'allongement, sous la face inférieure, et plus particulièrement sur le cadre rigide du panneau 18 d'allongement, de manière à faire pivoter le panneau 18 d'allongement par rapport au bâti 2 autour du troisième axe A4. La rotation du panneau 18 d'allongement autour du troisième axe A4 par rapport au bâti, dans un sens ou dans un autre, entraîne ainsi le déplacement longitudinal du panneau 7 d'assise et du panneau 8 de dossier vers l'avant ou vers l'arrière par rapport au bâti 2 par la mise en oeuvre du système 10 de glissement, pour que le siège passe d'une position à l'autre. Selon un mode de réalisation, l'actionneur de position est confondu avec l'actionneur du système 13 de verrouillage : sa mise en oeuvre peut entraîner conjointement le déverrouillage du système 13 de sécurité et la mise en oeuvre du système 10 de glissement. L'actionneur comprend un bouton de commande (non représenté) accessible à l'intérieur du véhicule, par exemple à proximité du siège 1. De préférence, le bouton de l'actionneur est disposé à une hauteur sur une paroi à l'intérieur du véhicule limitant les risques qu'un enfant n'appuie dessus.

Lorsque le siège 1 est en position assise, le système 13 de verrouillage est dans l'état verrouillé. Pour passer en position allongée, l'actionneur est mis en oeuvre. Selon un mode de réalisation, l'actionneur est mis en oeuvre en engageant le bouton de commande, qui commande à la fois le passage du système 13 de verrouillage dans la position déverrouillée et l'exercice d'un effort de poussée entre le bâti 2 et le panneau 18 d'allongement par le vérin 19 pour provoquer la rotation du panneau 18 d'allongement autour du troisième axe A3. Le panneau 7 d'assise est alors déplacé vers l'avant le long des rails sur les barres 3 longitudinales du bâti 2, la gâche 15 sortant de la serrure 14, jusqu'à ce que les barres 12 de glissière atteignent leur course maximale, mettant la glissière 11 dans la position déployée. En même temps, le panneau 8 de dossier et le panneau 18 d'allongement suivent le glissement du panneau 7 d'assise, l'angle entre le panneau 8 de dossier et le panneau 18 d'allongement s'ouvrant jusqu'à sensiblement 180°. Le siège 1 est alors en position allongée.

Lorsque le siège 1 est en position allongée, l'actionneur peut être de nouveau mis en oeuvre en engageant le bouton de commande, qui commande au vérin 19 d'exercer un effort de traction entre le bâti 2 et le panneau 18 d'allongement, pour faire pivoter le panneau 18 d'allongement autour du troisième axe A3, et de manière à opérer un déplacement vers l'arrière du panneau 7 d'assise. En même temps, l'angle entre le panneau 8 de dossier et le panneau 18 d'allongement se referme, jusqu'à sensiblement 0°. La gâche 15 pénètre dans l'ouverture 16 de la serrure, et est bloquée par le doigt 17 : le système 13 de verrouillage passe dans la position verrouillée lorsque le siège 1 atteint la position assise.

L'actionneur 19 est automatique : une fois que le bouton de commande est enclenché pour passer le siège 1 dans une position ou une autre, aucune intervention supplémentaire n'est nécessaire. Le siège 1 peut cependant comprendre, en complément de l'actionneur 19 automatique ou en variante, un actionneur manuel permettant à un utilisateur de mettre le siège dans l'une ou l'autre position en déverrouillant ou en verrouillant manuellement le système 13 de verrouillage, et en exerçant manuellement l'effort de poussée ou de traction sur le panneau 7 d'assise pour le déplacer le long des rails des barres 3 longitudinales du bâti 2. Par exemple, le vérin 19 peut être débrayable manuellement, afin de permettre le changement de position du siège 1 manuellement, par exemple en cas de défaut d'alimentation électrique du vérin 19, ou tout autre type de défaillance.

Selon un mode de réalisation, le siège 1 comprend de plus un système **20** d'extension latérale, permettant d'augmenter transversalement les dimensions de la surface de couchage. Le système 20 d'extension latérale est associé à au moins un du panneau 7 d'assise, du panneau 8 de dossier et du panneau 18 d'allongement. Selon un mode de réalisation qui est celui présenté ici, le système 20 d'extension latérale est associé à chacun des panneaux 7, 8 et 18. Ainsi, le système 20 d'extension comprend trois supports **21.** Chaque support 21 est rigide, par exemple métallique, et est monté glissant suivant la direction transversale par rapport au panneau 7, 8 ou 18 auquel il est associé, d'un même côté transversal du siège 1. Plus précisément, chaque support 21 est monté glissant par rapport au cadre rigide du panneau 7, 8 ou 18 auquel il est associé, de sorte que le système 20 d'extension latérale peut prendre deux positions :
- Une position rétractée dans laquelle chaque support 21 est intégré dans le panneau 7, 8 ou 18 sur lequel le support est monté ;
- Une position déployée dans laquelle chaque support 21 est sorti au moins en partie hors du panneau sur lequel il est monté.

Par exemple, dans la position rétractée, le support 21 est intégré dans le coussin du panneau 7, 8 ou 18 sur lequel il est monté, c'est-à-dire qu'il est enveloppé par la housse. La housse comprend à cet effet une ouverture refermable, par exemple avec une fermeture à glissière, le long d'un bord latéral du coussin du panneau 7, 8 ou 18, le support 21 sortant du panneau par ladite ouverture de la housse. De préférence, le support 21 en position rétractée est sur la face inférieure des coussins, c'est-à-dire qu'il est couvert sur le dessus par la garniture du coussin de sorte qu'un passager assis ou allongé sur les faces supérieures des panneaux 7, 8, 18 du siège 1 ne sent pas les supports 21 en position rétractée.

Chaque support 21 en position déployée peut être recouvert par un coussin 22 ou 22', qui est posé sur le support 21. Eventuellement, le coussin 22, 22' peut être attaché de manière temporaire au support 21. Les coussins 22 peuvent être par exemple stockés dans un rangement du véhicule spécialement dédié, à proximité du siège 1.

Chaque support 21 peut comprendre un pied 23 pivotant destiné à venir en contact avec le plancher du véhicule lorsque le support est en position déployée. Le pied 23 permet d'augmenter la stabilité du support 21. Plus précisément, le pied 23 est par exemple monté pivotant sur la branche longitudinale du support 21 en U, autour d'un axe sensiblement longitudinal, de manière à pouvoir être replié dans le même plan que le U du support et être intégré dans le panneau 7, 8 ou 18 lorsque le support 21 est en position rétractée.

A partir de la position allongée du siège 1, et de la position rétractée du système 20 d'extension latérale, un utilisateur peut faire glisser manuellement chaque support 21 suivant la direction latérale, le cas échéant après avoir ouvert la housse des coussins, afin de les faire passer en position déployée. A cet effet, chaque support 21 peut être muni d'une poignée **24** sur la branche longitudinale du U, facilitant la manipulation par l'utilisateur : l'utilisateur se saisit de la poignée 24 et tire dessus pour faire glisser le support 21 en position déployée. Puis l'utilisateur peut déplier les pieds 23 pour les mettre en contact avec le plancher. Enfin, l'utilisateur pose les coussins 22, 22' sur les supports 21.

Chaque coussin 22, 22' peut être posé sur un seul support 21, ou chevaucher deux ou plus supports 21. Selon un mode de réalisation, un coussin 22 est posé à cheval sur le support 23 associé au panneau 7 d'assise et sur le support 23 associé au panneau 8 de dossier, un deuxième coussin est posé à cheval sur le support 23 associé au panneau 7 d'assise et le support 23 associé au panneau 18 d'allongement, et un troisième coussin 22' est posé sur le support 23 associé au panneau 18 d'allongement. Le troisième coussin 22' peut se retrouver avec une partie en porte-à-faux sur le support 23 associé au panneau 18 d'allongement, de sorte qu'il peut être muni d'un pied rétractable (non représenté) permettant de prendre appui sur le plancher du véhicule et limiter le porte-à-faux.

Le siège 1 offre ainsi une surface latérale augmentée à la fois longitudinalement grâce notamment au panneau 18 d'allongement mais également transversalement grâce au système 20 d'extension latérale. Un ou plusieurs utilisateurs peuvent ainsi s'allonger sur la surface de couchage offerte par le siège 1 en position allongée de manière confortable et stable.

Selon un exemple, la largeur du siège 1, c'est-à-dire la dimension transversale maximale du panneau 7 d'assise ou du panneau 8 de dossier ou du panneau 18 d'allongement, peut correspondre à une, deux ou trois places. Elle peut être comprise entre 600 et 1500 mm (millimètres), plus précisément entre 650 et 1300 mm, plus précisément encore entre 830 et 930 mm, et est par exemple égale à 880 mm. En position allongée, la longueur totale du siège 1, c'est-à-dire la somme des dimensions longitudinales du panneau 7 d'assise, du panneau 8 de dossier et du panneau 18 d'allongement bout à bout est adaptée pour le couchage d'un homme adulte. Elle peut être comprise entre 1650 et 2250 mm, plus précisément entre 1700 et 2200 mm, et est par exemple de 1930 mm. La largeur du système 20 d'extension latérale, c'est-à-dire la dimension transversale maximale des coussins 22, 22', permet d'atteindre une largeur totale pour la surface de couchage comprise entre 800 mm, et de préférence au moins 1700 mm, et de préférence encore comprise entre 1000 et 1500 m, et est par exemple égales à 1250 mm.

Selon un mode de réalisation, le siège 1 peut comprendre un système **25** de sécurité, par exemple de type Isofix ou I-size, permettant de fixer un siège enfant ou siège auto. Le système 25 de sécurité est par exemple porté par le panneau 7 d'assise, et comprend une plaque **26** fixée rigidement au panneau 7 d'assise, sur la face inférieure. La plaque 26 comprend des moyens pour fixer conformément au système Isofix ou I-size un siège de type siège enfant, ces moyens étant accessibles à un utilisateur du côté de la face supérieure des panneaux 7, 8 d'assise et de dossier, lorsque le siège 1 est en position assise. Par exemple, la plaque 26 comprend des crochets **27** disponibles entre le panneau 7 d'assise et le panneau 8 de dossier, pour un utilisateur lorsque le siège 1 est en position assise. Les crochets 27 permettent d'accrocher un siège enfant de manière classique comme pour tout système Isofix. Le système 25 de sécurité se déplace alors avec le panneau 7 d'assise lorsque le siège 1 passe d'une position à une autre. Les gâches 15 du système 13 de verrouillage peuvent être portées par la plaque 26 du système 25 de sécurité. La fixation de la plaque 26 sur le panneau 7 d'assise est conforme aux exigences en matière de sécurité relative à l'Isofix. Le mouvement entre le panneau 7 d'assise et le panneau 8 de dossier obtenu grâces aux biellettes 9, 9' et aux premiers axes A1, A2, A'1 et A'2 présenté plus haut permet notamment de conserver un espace entre le panneau de 7 d'assise et le panneau 8 de dossier lorsque le siège 1 est en position assise pour que les crochets 27 soient accessibles.

Le siège 1 permet ainsi d'offrir une surface de couchage en position allongée confortable. Toutefois, une telle cinématique entre la position allongée et la position assise peut poser un défi pour permettre d'utiliser le siège 1 pendant que le véhicule roule.

A cet effet, selon un mode de réalisation, le siège 1 est équipé d'au moins une ceinture **28** de sécurité. Selon l'exemple des figures, le siège 1 est équipé de deux ceintures 28 de sécurité, le siège 1 en position assise pouvant accueillir deux passagers.

La ceinture 28 de sécurité est à au moins deux points, et de préférence à trois points, conformément aux réglementations en matière de sécurité routière, le nombre de points d'une ceinture de sécurité correspondant au nombre de point de fixation sur le châssis du véhicule. Ainsi, la ceinture 28 de sécurité comprend au moins deux points de fixation sur le bâti 2 du siège, lui-même fixé rigidement au châssis du véhicule.

Chaque ceinture 28 de sécurité comprend une sangle 30, dont une extrémité est fixée rigidement au châssis du véhicule directement ou par l'intermédiaire du bâti 2. La fixation de la sangle 30 au bâti 2 forme un premier point de fixation de la ceinture 28 au châssis du véhicule. La ceinture 28 comprend alors une première accroche solidaire de la sangle 30. La ceinture 28 comprend de plus un premier boîtier de réception de la première accroche, et qui est fixé rigidement directement au châssis du véhicule ou par l'intermédiaire du bâti 2 de manière à former le deuxième point de fixation de la ceinture 28 au châssis du véhicule. Le boîtier permet de verrouiller un enclenchement de la première accroche dans le boîtier et de déverrouiller l'enclenchement. Le verrouillage et le déverrouillage est de préférence manuel. La longueur de la sangle 30 entre son extrémité fixé au châssis et la première accroche peut être réglable pour s'adapter aux dimensions de l'utilisateur, par exemple à l'aide d'un enrouleur. Les deux points de fixation de la ceinture 28 sont disposés de sorte que lorsque la première accroche est enclenchée dans le premier boîtier, la sangle maintien un utilisateur sur le siège 1. De préférence, afin de ne pas gêner le passage du siège 1 de la position assise à la position allongée et inversement, chaque point de fixation de la ceinture 28 de sécurité est disposé sous la face inférieure des panneaux 7, 8 et 18 lorsque le siège 1 est en position allongé.

Selon un mode de réalisation illustré sur les figures, le siège 1 comprend deux ceintures 28 de sécurité à trois points chacune. Chaque ceinture 28 comprend une sangle 30, associée à une extrémité à un enrouleur 30'. L'enrouleur 30' est fixé au bâti 2 du siège 1, en adéquation avec les exigences réglementaires en matière de sécurité. Ainsi, la fixation de l'enrouleur 30' sur le bâti 2 peut être rigide. Chaque ceinture 28 comprend de plus une première accroche 31 glissante le long de la sangle 30 et comprend un premier boîtier **32** de réception de la première accroche 31. La ceinture 28 de sécurité comprend en outre une deuxième accroche 33 à l'extrémité libre la sangle 30 et un deuxième boîtier 34 de réception pour la deuxième accroche 33. Les premiers boîtiers 32 sont disposés de part et d'autre, suivant la direction transversale, du siège 1, de manière à être disponible pour chaque passager. Une découpe 35 latérale est pratiquée de chaque côté, suivant la direction transversale, sur le panneau 8 de dossier, afin de disposer le premier boîtier 32 de chaque ceinture 28 de part et d'autre du panneau 8 de dossier lorsque le siège 1 est en position assise, tout en les laissant accessibles aux utilisateurs, entre le panneau 7 d'assise et le panneau 8 de dossier, lorsque le siège 1 est en position assise pour la route. Les premiers boîtiers 32 et les deuxièmes boîtiers 34 sont fixés rigidement au bâti 2 du siège, comme cela sera décrit plus loin. Une découpe 35' centrale sur le panneau 8 de dossier permet de disposer les deuxièmes boîtiers 34 au moins en partie à travers le volume du panneau 8 de dossier, tout en les laissant accessibles aux utilisateurs, entre le panneau 7 d'assise et le panneau 8 de dossier, lorsque le siège 1 est en position assise pour la route.

Plus précisément, le bâti 2 du siège 1 comprend un mât 36 sensiblement vertical, c'est-à-dire destiné à s'étendre sensiblement perpendiculairement au plancher du véhicule dans lequel le siège 1 est assemblé. Le mât 36 peut être commun aux deux ceintures 28 de sécurité. Une traverse 37, c'est-à-dire une barre transversale, est fixée rigidement au mât 36. Les boîtiers 32, 34 sont montés sur la traverse 37 : les premiers boîtiers 32 sont montés chacun sur une portion de la traverse 37 dépassant transversalement une barre 3 longitudinale du bâti 2 ; les deuxièmes boîtiers 34 sont montés dans une région centrale de la traverse 37. La sangle 30 de chaque ceinture 28 est montée le long du mât **36** vertical fixé rigidement au châssis du véhicule, à partir de son enrouleur 30', qui peut alors être fixé sur le mât 36. Le mât 36 supporte un guide **38** permettant de guider le déroulement de la sangle 30. En particulier, le mât 36 permet de guider la sangle 30 au-dessus du panneau 8 de dossier lorsque le siège 1 est en position assise. Un utilisateur peut ainsi saisir la sangle 30 d'une ceinture 28 de sécurité, dérouler la sangle 30 jusqu'à accrocher la première accroche 31 dans un premier boîtier 32, puis ajuster la longueur de la sangle 30 et la position de la deuxième accroche 33 le long de la sangle 30 de manière à accrocher la deuxième accroche 33 dans le deuxième boîtier 34.

Selon un mode de réalisation, les boîtiers 32, 34 sont mobiles entre deux positions :
- Une position dite escamotée, dans laquelle les boîtiers 32, 34 se situent dans une région située sous la face inférieure du panneau 7 d'assise ;
- Une position dite d'accroche dans laquelle les boîtiers 32, 34 se situent au moins en partie dans une région située au-dessus de la face inférieure du panneau 7 d'assise.

Plus précisément, la face inférieure du panneau 7 d'assise définit un plan sensiblement horizontal qui sépare l'environnement du siège 1 en deux régions : une région située sous la face inférieure du panneau 7 d'assise, c'est-à-dire une région définie entre le plancher du véhicule et la face inférieure du panneau 7 d'assise, et la région opposée, située au-dessus de la face inférieure du panneau 7 d'assise.

Ces deux positions des boîtiers 32, 34 permettent au siège 1 de passer de de la position assise à la position allongée, et inversement, sans empêcher le système 10 de glissement de fonctionner, tout en conservant les boîtiers 32, 34 à l'intérieur d'un volume délimité latéralement par le panneau 7 d'assise. En particulier, les boîtiers 32, 34 sont en position d'accroche lorsque le siège 1 est en position assise. Selon un mode de réalisation, lorsque le siège 1 est en position assise et que des découpe 35, 35' sont pratiquées sur le panneau 8 de dossier, les boîtiers 32, 34 sont accessible à travers les découpes 35, 35', entre le panneau 7 d'assise et le panneau 8 de dossier. Lorsque le siège 1 est en position allongée, les boîtiers 32, 3' sont en position escamotée, de sorte qu'un passager allongé sur le siège 1 en position allongée ne perçoit aucune gêne par les boîtiers sous le panneau 7 d'assise. De plus, en position escamotée, les boîtiers 32, 34 sont dégagés en dehors de la trajectoire des panneaux 7, 8, 18 et du système 10 de glissement. Ainsi, de préférence, les boîtiers 32, 34 sont en position escamotée pendant le mouvement du siège 1 entre ses positions.

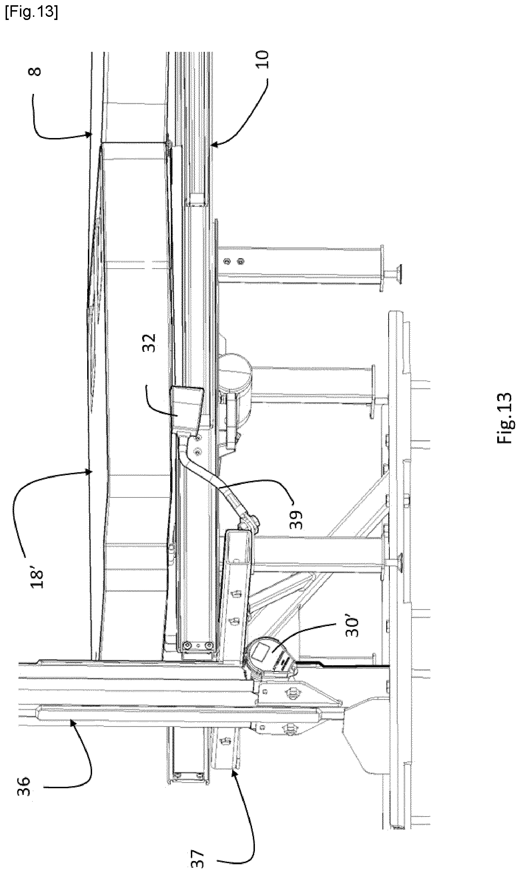

Le passage du siège 1 de la position assise à la position allongée peut être concomitant avec le passage des boîtiers 32, 34 de la position d'accroche à la positon escamotée ; et inversement le passage du siège 1 de la position allongée à la position assise peut être concomitant avec le passage des boîtiers 32, 34 de la position escamotée à la positon d'accroche. Par exemple, au moins un des boîtier 32, 34, et de préférence chacun des boîtiers 32, 34, des ceintures 28 de sécurité est fixé à la traverse 37 par l'intermédiaire d'une tige 39 souple. Plus précisément, chaque tige 39 souple, à une de ses extrémités, est fixée rigidement au bâti 2 du siège au point de fixation adapté, dans la région sous les panneaux 7, 8, 18 lorsque le siège 1 est en position allongée. Un boîtier 32, 34 est monté sur l'autre extrémité de chaque tige 39 souple. Chaque tige 39 est dite souple car elle présente une souplesse au moins en flexion adaptée pour admettre une déformation sans se briser lors des changements de position du siège 1. Notamment, en position assise, aucun effort n'est exercé par les panneaux 7, 8 sur les boîtiers 32, 34. Lorsque le siège amorce son passage en position allongée, le panneau 8 de dossier peut appuyer sur les boîtiers 32, 34 de manière à fléchir les tiges 39 et à amener les boîtiers dans la position escamotée. En continuant le déploiement du siège 1 jusqu'à la position allongée, le panneau 18 d'allongement peut à son tour exercer un effort sur les boîtiers 32, 34, de manière à les maintenir en position escamotée, pour qu'ils ne viennent pas gêner un utilisateur qui s'allonge sur le siège en position allonger (figure 13). Lorsque le siège 1 passe de la position allongée à la position assise, le mouvement inverse enclenche, au plus tard lorsque le siège 1 atteint la position assise, les boîtiers dans la position d'accroche.

Selon un mode de réalisation, le point de fixation de chaque tige 39 sur le bâti 2 est situé sous la face inférieure des panneaux 7, 8, 18 lorsque le siège 1 est en position allongée, tout en permettant le mouvement des boîtiers 32, 34. L'encombrement sur les côtés latéraux du siège est ainsi réduit.

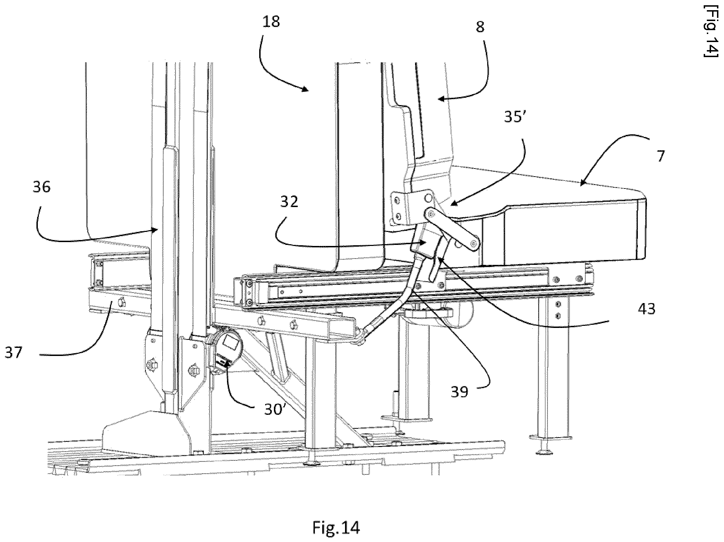

Selon un mode de réalisation, les tiges 39 peuvent être élastiques en flexion, de sorte qu'en l'absence d'un effort sur les boîtiers 32, 34, ceux-ci reprennent une position initiale déterminée qui est celle permettant à un utilisateur sur le siège 1 en position assise d'y avoir accès. En variante ou en combinaison de l'élasticité en flexion d'une tige 39 d'un boîtier 32, 34, au moins un guide 43 peut être fixé sur l'un ou l'autre du panneau 7 d'assise et du panneau 8 de dossier, au niveau de la découpe 35, 35' correspondante lorsque le siège 1 est en position assise. Un tel guide 43 fonctionne comme une rampe dans laquelle le boîtier 32, 34 glisse lorsque le siège 1 passe de la position allongée à la position assise afin de ramener le boîtier au niveau de la découpe 35, 35' correspondante et y donner accès aux utilisateurs lorsque le siège 1 est en position assise. Il peut être prévu autant de guides 43 que de boitiers 32, 34, chaque guide 43 étant dédié à un boîtier 32, 34. En variante, un guide 43 peut être formé comme une unique pièce s'étendant transversalement pour guider tous les boîtiers 32, 34 (figure 14).

Ainsi, par cette configuration, les points de fixation de chaque ceinture 28 de sécurité sont fixés sur le bâti 2 du siège 1, facilitant l'installation du siège 1 muni des ceintures 28 de sécurité dans le véhicule tout en garantissant la sécurité des utilisateurs. Plus précisément, le mât 36 En outre, grâce notamment à la fixation des boîtiers 32, 34 par les tiges 39 souples, les boîtiers 32, 34 demeurent sous les panneaux 7, 8, 18 lorsque le siège 1 est en position allongée, n'offrant aucune gêne à un utilisateur allongé sur le siège.

Selon un mode de réalisation, le panneau 8 de dossier comprend au moins un repose-tête 40. Selon l'exemple des figures, le panneaux 8 de dossier comprend deux repose-têtes 40. Le panneau 18 d'allongement peut alors comprend, pour chaque repose-tête 40, un logement **41** de forme négative, ou en creux, correspondant à la forme du repose-tête 40, de sorte qu'en position allongée du siège 1, chaque repose-tête 40 du panneau 8 de dossier est inséré dans le logement 41 du panneau 18 d'allongement. Les repose-têtes 40, offrant un confort pour les utilisateurs lorsque le siège 1 est en position assise, n'occasionnent ainsi pas de gêne lorsque le siège 1 est en position allongée ni manipulation.

## Revendications

1. Siège (1) pour véhicule, le siège (1) comprenant un bâti (2) destiné à être rigidement fixé à un châssis du véhicule, un premier panneau (7) dit d'assise et un deuxième panneau (8) dit de dossier, le panneau (7) d'assise et le panneau (8) de dossier étant articulés l'un par rapport à l'autre autour d'au moins un premier axe (A1) de rotation solidaire d'au moins l'un du panneau (7) d'assise et du panneau (8) de dossier et s'étendant suivant une direction transversale de sorte que le siège (1) peut prendre au moins les deux positions suivantes :
- Une position assise dans laquelle le panneau (8) de dossier et le panneau (7) d'assise sont inclinés l'un par rapport à l'autre sensiblement à angle droit ;
- Une position allongée dans laquelle le panneau (8) de dossier et le panneau (7) d'assise sont sensiblement dans le prolongement l'un de l'autre suivant une direction longitudinale, de manière à former une surface de couchage,
le siège (1) comprenant en outre un système (10) de glissement pour déplacer solidairement le panneau (7) d'assise et le panneau (8) de dossier par rapport au bâti (2) du siège suivant une direction longitudinale, et un système (13) de verrouillage pour verrouiller et déverrouiller le système (10) de glissement au moins lorsque le siège (1) est en position assise,
le siège (1) étant **caractérisé en ce qu'**il comprend de plus au moins un troisième panneau (18) dit d'allongement, articulé d'une part par rapport au panneau (8) de dossier autour d'au moins un deuxième axe (A3) de rotation s'étendant suivant la direction transversale, distinct du premier axe (A1) transversal, et d'autre part par rapport au bâti (2) autour d'un troisième axe (A4) transversal distinct du premier axe (A1) transversal et du deuxième axe (A3) transversal, de sorte que :
- dans la position assise, le panneau (18) d'allongement est sensiblement rabattu contre le panneau (8) de dossier ;
- dans la position allongée, le panneau (18) d'allongement et le panneau (8) de dossier sont sensiblement dans le prolongement l'un de l'autre suivant la direction longitudinale.
le siège (1) comprenant en outre au moins une ceinture (28) de sécurité à au moins deux points de fixation, la ceinture (28) comprenant au moins une sangle (30) comprenant une extrémité destinée à être fixée rigidement au châssis du véhicule , ladite ceinture (28) comprenant au moins une accroche (31, 33) solidaire de la sangle (30) et comprenant au moins un boîtier (32, 34) de réception de ladite accroche (31, 33), le boîtier (32,34) étant destiné à être rigidement fixé au châssis du véhicule.

2. Siège selon la revendication précédente, dans lequel le panneau (7) d'assise comprend une face supérieure destinée à être en contact avec un utilisateur et une face inférieure, et dans lequel le boîtier (32, 34) peut prendre au moins deux positions :
- Une position dite escamotée, dans laquelle le boîtier (32, 34) se situe dans une région sous la face inférieure du panneau (7) d'assise ;
- Une position dite d'accroche dans laquelle le boîtier (32, 34) se situe au moins en partie dans une région située au-dessus de la face inférieure du panneau (7) d'assise.

3. Siège (1) selon la revendication 2, dans lequel le boîtier (32,34) est en position d'accroche au moins lorsque le siège est en position assise, et le boîtier (32,34) est en position escamotée au moins lorsque le siège est en position allongée.

4. Siège (1) selon l'une quelconque des revendications 1 à 3, dans lequel la ceinture (28) de sécurité est une ceinture à trois points de fixation, le siège (1) comprenant de plus un mât (36) dit vertical destiné à être fixé rigidement au châssis du véhicule et sur lequel les trois points de fixation de la ceinture (28) sont formés, la sangle (30) étant guidée au moins en partie le long du mât (36).

5. Siège (1) selon la revendication l'une quelconque des revendications précédentes, dans lequel le système (13) de verrouillage comprend au moins une gâche (15) fixée rigidement sur au moins un du panneau (7) d'assise ou du panneau (8) de dossier, et qui comprend au moins une serrure (14) fixée rigidement au bâti (2), le système (13) de verrouillage pouvant prendre deux positions :
- Une position verrouillée, dans laquelle la gâche (15) est bloquée dans la serrure (14), le siège (1) étant en position assise ;
- Une position déverrouillée, dans laquelle la gâche (15) est écartée de la serrure (14) ;
Le système (13) de verrouillage passant de la position verrouillée à la position déverrouillée par actionnement d'un doigt (17) de blocage.

6. Siège (1) selon l'une quelconque des revendications précédentes, dans lequel le système (10) de glissement comprend au moins un rail (4) longitudinal sur le bâti (2) et au moins une glissière (11) sur le panneau (7) d'assise coopérant avec ledit rail (4).

7. Siège (1) selon la revendication précédente, dans lequel la glissière (11) comprend au moins une barre (12) de glissière longitudinale montée glissante sur le rail (4), la glissière (11) pouvant prendre au moins deux positions :
- Une position rétractée, dans laquelle la longueur de la barre (12) de glissière hors rail suivant la direction longitudinale est minimale, le siège (1) étant en position assise ;
- Une position déployée, dans laquelle la longueur de la barre (12) de glissière hors rail suivant la direction longitudinale est maximale, le siège (1) étant en position allongée.

8. Siège (1) selon l'une quelconque des revendications précédentes, dans lequel le panneau (7) d'assise comprend une plaque (26) munie de crochets (27) pour former un système (25) de sécurité par exemple de type Isofix et/ou I-size destiné à la fixation d'un siège enfant.

9. Siège (1) selon l'une quelconque des revendications précédentes, comprenant un système d'extension latérale, le système (20) d'extension latérale comprenant au moins un support (21) destiné à supporter un coussin (22), ledit support (21) étant monté glissant sur au moins un desdits panneaux (7, 8, 18) suivant une direction transversale, le système (20) d'extension latérale pouvant prendre au moins deux positions :
- Une position rétractée dans laquelle le support (21) est intégré dans le panneau (7, 8, 18) sur lequel le support (21) est monté ;
- Une position déployée dans laquelle le support (21) est sorti au moins en partie hors du panneau (7, 8, 18) sur lequel il est monté.

10. Siège (1) selon la revendication précédente, dans lequel ledit support (21) est muni d'un pied (23) pivotant destiné à venir en contact avec un plancher du véhicule lorsque le support (20) est en position déployée.

11. Siège (1) selon la revendication 9 ou la revendication 10, dans lequel au moins l'un du panneau (7) d'assise, du panneau (8) de dossier et du panneau (18) d'allongement sur lequel le support (21) est monté comprend un coussin, et dans lequel le support (21) en position rétractée est intégré dans le coussin du panneau (7, 8, 18) sur lequel le support (21) est monté.

12. Siège (1) selon l'une quelconque des revendications 9 à 11, dans lequel le système (20) d'extension latérale comprend au moins trois supports (21), chaque support (21) étant monté sur l'un du panneau (7) d'assise, du panneau (8) de dossier et du panneau (18) d'allongement.

13. Siège (1) selon l'une quelconque des revendications précédentes, dans lequel le panneau (8) de dossier comprend au moins un repose-tête (40), et dans lequel le panneau (18) d'allongement comprend un logement (41) de forme négative au repose-tête (40), de sorte qu'en position allongée le repose-tête (40) du panneau (8) de dossier est inséré dans le logement (41) du panneau (18) d'allongement.

14. Siège (1) selon l'une quelconque des revendications précédentes, comprenant un actionneur pour passer le siège (1) de la position assise à la position allongée et inversement, l'actionneur comprenant au moins un vérin (19) commandé électriquement, le vérin (19) prenant appui d'une part sur le bâti (2) et d'autre part sur le panneau (18) d'allongement.

15. Véhicule comprenant au moins un siège (1) selon l'une quelconque des revendications précédentes.
